# EUROPÄISCHE PATENTSCHRIFT

(11) **EP 3 164 919 B1**
(45) Veröffentlichungstag und Bekanntmachung des Hinweises auf die Patenterteilung: **15.08.2018**
(21) Anmeldenummer: 15729438.0
(22) Anmeldetag: 12.06.2015
(51) Int. Cl.: H02B 13/035, H02G 15/22, H01R 13/53

(54) **KABELENDVERSCHLUSS ZUR ANBINDUNG EINER SCHALTANLAGE AN EIN HOCHSPANNUNGSKABEL**
CABLE TERMINATION FOR CONNECTING A SWITCHGEAR ASSEMBLY TO A HIGH-VOLTAGE CABLE
TERMINAISON DE CÂBLE POUR RELIER UNE INSTALLATION DE COMMUTATION À UN CÂBLE HAUTE TENSION

(30) Priorität: 01.07.2014 DE 202014005301 U
(43) Veröffentlichungstag der Anmeldung: 10.05.2017
(73) Patentinhaber: ABB Schweiz AG, 5400 Baden (CH)
(72) Erfinder: PRAJAPATI, Chetan, Vadodara 390019 (IN); HALLAS, Martin, 64287 Darmstadt (DE); PROBST, Heinrich, 63825 Blankenbach (DE); DESCH, Michael, 63628 Bad Soden Salmünster (DE)
(74) Vertreter: ABB Patent Attorneys
(86) Internationale Anmeldenummer: PCT/EP2015/063185
(87) Internationale Veröffentlichungsnummer: WO 2016/000931

(56) Entgegenhaltungen:
- DE-U1- 7 738 424
- DE-U1-202014 003 281
- JP-U- S 637 905

## Beschreibung

Die Erfindung betrifft einen Kabelendverschluss zur Anbindung einer Schaltanlage an ein Hochspannungskabel.

Unter Kabelendverschluss ist die seitens des Schaltanlagenherstellers in einer gekapselten Schaltanlage vorzusehende Kabelanbindung zu verstehen. Vorliegend geht es um einen Kabelendverschluss, der zur Anbindung einer Hochspannungsschaltanlage, insbesondere einer gasisolierten Schaltanlage (GIS), an ein dreiphasiges bzw. drei einphasige Hochspannungskabel dient. Insbesondere ist der Spannungsbereich 72,5 kV bis 170 kV von Interesse, bei dem vorranging drei einphasige Kabelanbindungen zum Einsatz kommen. Zum Gaseinschluss, als Schutz gegen direktes Berühren sowie gegen Umwelteinflüsse ist die Verbindung zwischen Kabel und Schaltanlage in einem Metallgehäuse gekapselt. In der Schaltanlage ist dieses Gehäuse fest eingebaut. Der Kabelendverschluss stellt damit eine in der Schaltanlage vorinstallierte Kabelaufnahme dar. Diese Kabelaufnahme wird mit einem am Kabelende angebrachten Kabelanschlussteil verbunden, wodurch die elektrische Verbindung hergestellt wird.

Oben genannte elektrische Verbindung der Kabelaufnahme soll mit einer erweiterten Funktion versehen werden, um nach Bedarf eine Isolierstrecke in der Kabelaufnahme herstellen zu können. Stand der Technik ist es, die Isolierstrecke vertikal entlang der Leiterführung zu implementieren.

Aus der DE202014003281U1 ist eine Vorrichtung für Kabelendverschlüsse zur Anbindung einer Schaltanlage an ein Hochspannungskabel bekannt. Dieser Kabelendverschluss weist ein Gehäuse und drei in das Gehäuse hineinragende, isolierte Kabelanschlusselemente zur Herstellung einer elektrischen Verbindung der Schaltanlage mit jeweils einer am Ende einer Phase eines Hochspannungskabels angebrachten Kabelendverstärkung auf. Die Kabelanschlusselemente sind derart in einer sich senkrecht zur Eintrittsrichtung der Kabelanschlusselemente in das Gehäuse (60) ertreckenden ersten Ebene angeordnet, dass sie die Ecken eines ersten Dreiecks bilden, während die Phasenanschlussteile in einer zur ersten Ebene parallelen zweiten Ebene derart angeordnet sind, dass sie die Ecken eines zweiten Dreiecks bilden. Dabei ist jede Ecke des ersten Dreiecks jeweils mit einer ihr zugeordneten Ecke des zweiten Dreiecks verbunden.

Ausgehend vom Stand der Technik ist es Aufgabe der Erfindung, einen Kabelendverschluss zur Anbindung einer Schaltanlage an ein Hochspannungskabel vorzusehen, mit welchem die die geforderte Zusatzfunktion der "Isolierstrecke" kompakt realisiert werden kann.

Diese Aufgabe wird gelöst durch einen Kabelendverschluss, welcher zur Anbindung einer Schaltanlage an ein dreiphasiges bzw. drei einphasige Hochspannungskabel dient, umfassend:
- mindestens ein Gehäuse,
- drei in das Gehäuse hineinragende, isolierte Kabelanschlusselemente mit innenliegendem Leiter zur Herstellung einer elektrischen Verbindung der Schaltanlage mit jeweils einer am Ende einer Phase eines Hochspannungskabels angebrachten Kabelendverstärkung, und
- drei von einer den Kabelanschlusselementen gegenüberliegenden Seite ebenfalls in das Gehäuse hineinragende, als Hohlkörper ausgeführte Phasenanschlussteile, in welche jeweils eine der Kabelendverstärkungen einzubringen ist, wobei
- die isolierten Kabelanschlusselemente in einer ersten Ebene, die senkrecht zur Eintrittsrichtung der Kabelanschlusselemente in das Gehäuse verläuft, so angeordnet sind, dass sie die Ecken eines ersten Dreiecks bilden,
- die Phasenanschlussteile in einer zur ersten Ebene parallelen zweiten Ebene so angeordnet sind, dass sie die Ecken eines zweiten Dreiecks bilden,
- die jeweils eine Ecke des ersten Dreiecks, die einem Kabelanschlusselement entspricht, und die jeweils eine Ecke des zweiten Dreiecks, die einem mit dem Kabelanschlusselement zu verbindenden Phasenanschlussteil entspricht, zwei einander zugehörige Ecken bilden,
- das erste Dreieck und das zweite Dreieck innerhalb ihrer jeweiligen Ebene gegeneinander verdreht sind, wobei die Verdrehung ausgehend von einer Lage erfolgt, bei der in einer Aufsicht senkrecht zur ersten und zweiten Ebene die Abstände zwischen den jeweils zugehörigen Ecken des ersten und des zweiten Dreiecks einen kleinstmöglichen Wert annehmen,
- zwischen jeweils einem Kabelanschlusselement und dem zugehörigen Phasenanschlussteil ein Verbindungselement angeordnet ist.

Durch vollständiges bzw. teilweises Entfernen der drei Verbindungselemente kann die elektrische Verbindung zwischen dem ersten und zweiten Dreieck unterbrochen werden, wobei das Entfernen selbst durch einen beliebigen Mechanismus ermöglicht werden kann. Der Mechanismus zum Lösen lässt dabei eine Isolierstrecke zwischen Kabel und GIS entstehen.

Die innenliegenden Leiter der Kabelanschlusselemente und die Phasen des Hochspannungskabels innerhalb des Gehäuses sind dabei bevorzugt in einer ersten Richtung parallel zueinander ausgerichtet und die Verbindungselemente überbrücken jeweils einen aufgrund der Verdrehung entstandenen Versatz zwischen Kabelanschlusselement und zugehörigem Phasenanschlussteil.

Dabei wird insbesondere eine erste Richtung bevorzugt, die in der Vertikalen verläuft, wodurch der Versatz in horizontaler Richtung entsteht. Die nach dem Entfernen jeweils eines der Verbindungselemente resultierende Isolierstrecke zwischen dem ersten und zweiten Dreieck hat damit jeweils eine Komponente in der Vertikalen und in der Horizontalen, wobei die Komponente in der Horizontalen die betragsmäßig größere ist.

Anhand der in den weiteren Zeichnungen dargestellten Ausführungsbeispiele sollen die Erfindung und ihre Ausgestaltung nun näher beschrieben werden.

Es zeigen:
- Fig. 1: eine beispielhafte gasisolierte Schaltanlage mit Kabelendverschluss;
- Fig. 2: eine seitliche Schnittansicht eines bekannten Kabelendverschlusses;
- Fig. 3: eine dreidimensionale Außenansicht eines Kabelendverschlusses;
- Fig. 4: eine Darstellung der gemäß der Erfindung durch Kabelanschlusselemente und Phasenanschlussteile gebildeten Dreiecke;
- Fig. 5: eine seitliche Schnittansicht eines erfindungsgemäß ausgestalteten Kabelendverschlusses;
- Fig. 6: eine Schnittansicht des Kabelendverschlusses aus Fig. 5 von oben.

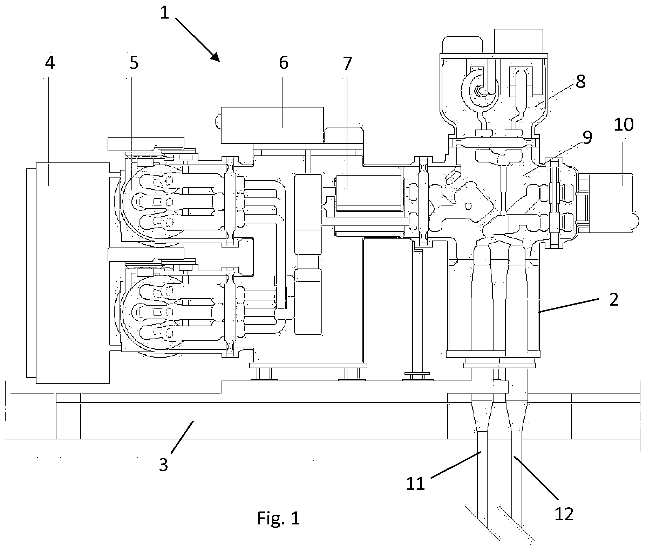

Figur 1 zeigt eine aus dem Stand der Technik bekannte, gasisolierte Schaltanlage 1, welche auf einem Fundament 3 steht, über einen Steuerschrank 4 betrieben wird und folgende, dreiphasig ausgeführte Bestandteile aufweist: eine Sammelschiene 5 mit kombiniertem Trenn- und Erdungsschalter, einen Leistungsschalter 6, einen Stromwandler 7, einen Spannungswandler 8, einen kombinierten Leitungstrenn- und Erdungsschalter 9, einen einschaltfesten Erdungsschalter 10 sowie einen Kabelendverschluss 2, an welchen Hochspannungskabel 11 und 12 angeschlossen sind. Das dritte Hochspannungskabel, also die dritte der drei Phasen, ist in der Darstellung nicht zu sehen, da es sich direkt hinter dem Hochspannungskabel 11 befindet.

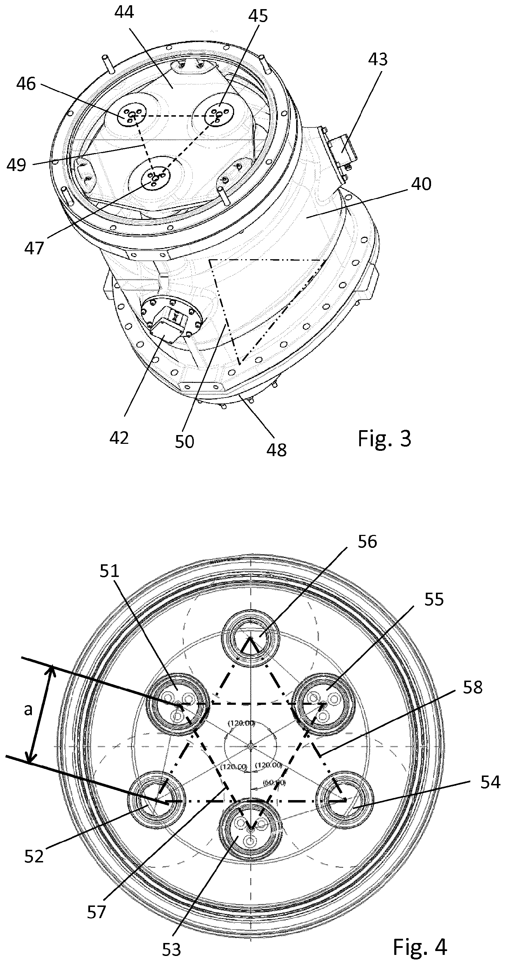

In Figur 3 ist eine dreidimensionale Ansicht eines Kabelendverschlusses zu sehen, bestehend aus einem Gehäuse 40 und einem Bodenverschlusselement 48. Das Gehäuse ist an der dem Bodenverschlusselement 48 gegenüberliegenden, oberen Stirnseite offen, wodurch ein Blick von oben in das Innere des Kabelendverschlusses möglich ist. Dadurch wird die Feststoffisolierung 44, beispielsweise ein Gießharz, sichtbar, in welche die elektrischen Anschlüsse der drei Phasen 45, 46, 47 zum Anschluss an die Schaltanlage eingelassen sind. Diese Anschlüsse werden im Folgenden als Kabelanschlusselemente bezeichnet.

Außerdem ist erkennbar, dass das Gehäuse 40 mit drei den Phasen zugeordneten Hochspannungserkennungseinheiten ausgerüstet ist, wobei in Figur 3 mit den Hochspannungserkennungseinheiten 42, 43 nur zwei davon tatsächlich sichtbar sind. Dementsprechend weist das Gehäuse 40 drei vorkonfektionierte Öffnungen zur Anbringung dieser Hochspannungserkennungseinheiten auf.

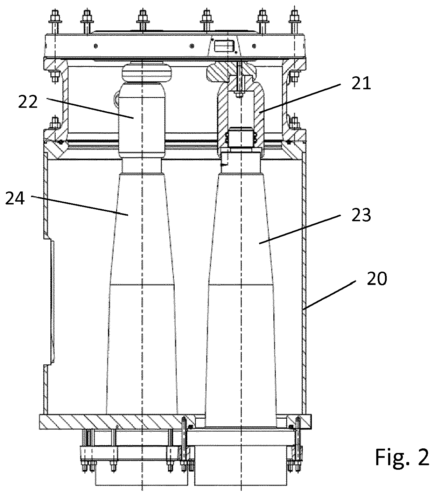

Zusätzlich zu den bereits genannten Elementen zeigt die in der Figur 2 dargestellte seitliche Schnittansicht eines bekannten Kabelendverschlusses die im Inneren des Gehäuses 20 befindlichen Kabelanschlusselemente, 21, 22, welche jeweils fest mit einem der Phasenanschlussteile 23, 24 verbunden sind. Es sind darstellungsbedingt wieder nur jeweils zwei der Kabelanschlusselemente und Phasenanschlussteile zu sehen, während die jeweils dritten Kabelanschlusselemente und Phasenanschlussteile durch die Schnittdarstellung nicht sichtbar sind.

Bei der Installation der Hochspannungsschaltanlage werden, in Fig. 2 nicht dargestellte, Kabelendverstärkungen in ein jeweils zugehöriges Phasenanschlussteil eingeführt, wodurch ein sich an die Kabelendverstärkungen anschließendes Hochspannungskabel mit dem zum jeweiligen Phasenanschlussteil zugehörigen Kabelanschlusselement elektrisch leitend verbunden wird. Dieses In-Verbindungbringen der Hochspannungsschaltanlage mit den Hochspannungskabeln kann entweder noch beim Schaltanlagenhersteller oder erst am Installationsort der Schaltanlage erfolgen.

Wie den Figuren 2 und 3 zu entnehmen ist, sind bei dem bekannten Kabelendverschluss die Kabelanschlusselemente und jeweils zugehörigen Phasenanschlussteile in gerader Linie zueinander angeordnet, d.h. das durch die Kabelanschlusselemente in ihrer Austrittsebene aus der Feststoffisolation 44 gebildete erste Dreieck 49 fluchtet mit dem durch die Phasenanschlussteile in ihrer Austrittsebene aus dem Bodenverschlusselement 48 gebildeten zweiten Dreieck 50, wobei der durch ein Kabelanschlusselement gebildete Eckpunkt des ersten Dreiecks 49 und der durch das mit diesem Kabelanschlusselement verbundene Phasenanschlussteil gebildete Eckpunkt des zweiten Dreiecks 50 einander zugehörige Ecken bilden. Der Begriff "fluchtend" soll hier so verstanden werden, dass in einer Aufsicht auf den Kabelendverschluss der Figur 3 die einander zugehörigen Ecken jeweils den kleinstmöglichen Abstand zueinander einnehmen, d.h. bei gleichgroßen Dreiecken übereinander liegen.

Die Figur 4 zeigt eine Darstellung der gemäß der Erfindung durch Kabelanschlusselemente 51, 53, 55 und Phasenanschlussteile 52, 54, 56 gebildeten ersten (57) und zweiten (58) Dreiecke, welche in diesem Beispiel um 60 Grad gegeneinander verdreht sind. Einander zugehörige Ecken werden gebildet durch folgende Paarungen von Kabelanschlusselementen und Phasenanschlussteilen: [51, 52], [53, 54] und [55, 56].

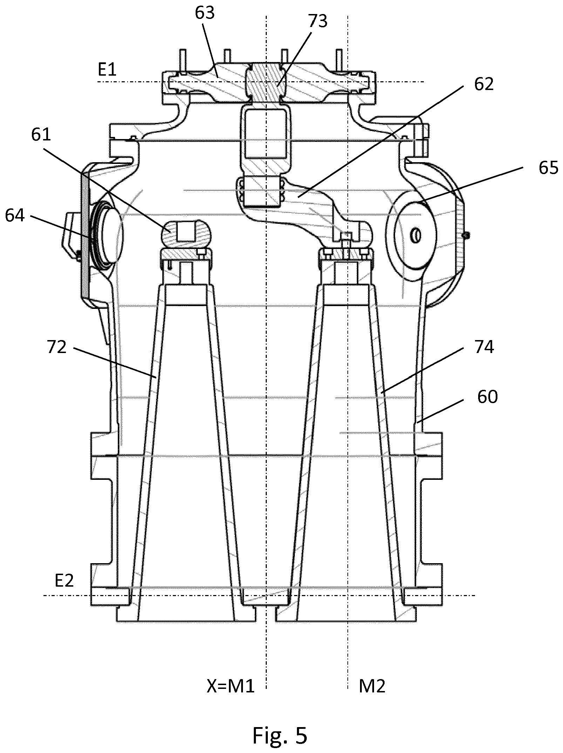

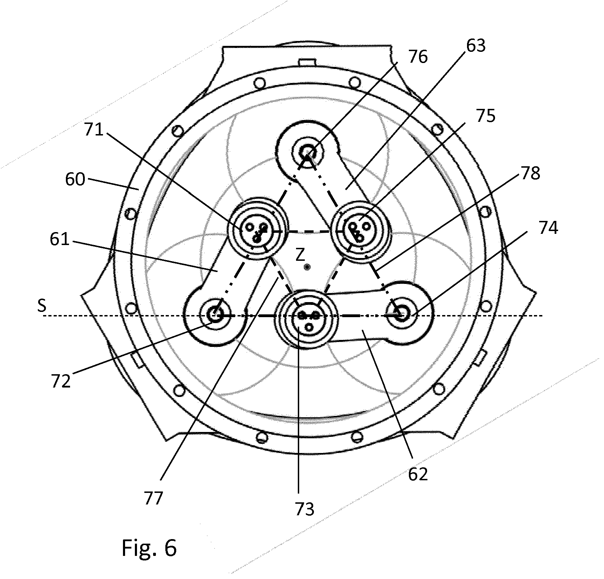

Der Figur 5 kann eine seitliche Schnittansicht eines erfindungsgemäß ausgestalteten Kabelendverschlusses entnommen werden, und Figur 6 eine Schnittansicht dieses Kabelendverschlusses von oben. Im Folgenden werden gleiche Elemente mit gleichen Bezugszeichen versehen.

Auch in den Figuren 5 und 6 gibt es wieder ein Gehäuse 60 mit einer Längsausdehnung, welches zur oberen Stirnseite hin mit einer Feststoffisolierung 63 verschlossen ist, wobei durch die Feststoffisolierung 63 hindurch drei Kabelanschlusselemente 71, 73, 75 in das Gehäuse hineinragen. Die Kabelanschlusselemente 71, 73, 75 verfügen über innenliegende Leiter zur Herstellung einer elektrischen Verbindung mit jeweils einer am Ende einer Phase eines Hochspannungskabels angebrachten, hier nicht dargestellten Kabelendverstärkung. Außerdem ragen von einer den Kabelanschlusselementen gegenüberliegenden Seite drei, als Hohlkörper ausgeführte Phasenanschlussteile 72, 74, 76 in das Gehäuse 60 hinein, in welche jeweils eine der Kabelendverstärkungen einzubringen wäre.

In Figur 6 ist die Schnittebene S angedeutet, entlang welcher die Schnittansicht aus Figur 5 verläuft. Da das Verbindungselement 61 aus der Schnittebene S heraus, nach hinten in den Raum hinein gerichtet ist, ist von ihm tatsächlich nur ein mit dem zugehörigen Phasenanschlussteil 72 verbundener Anfangsabschnitt sichtbar. Die Elemente 71, 75, 76 und 63 werden durch die Schnittebene S nicht berührt, und sind deshalb überhaupt nicht in Figur 5 zu sehen.

Die isolierten Kabelanschlusselemente 71, 73, 75 sind in einer ersten Ebene E1, die senkrecht zur Eintrittsrichtung (M1) der Kabelanschlusselemente in das Gehäuse 60 verläuft, so angeordnet, dass sie die Ecken eines ersten Dreiecks 77 bilden.
Die Phasenanschlussteile 72, 74, 76 sind in einer zur ersten Ebene E1 parallelen zweiten Ebene E2 so angeordnet, dass sie die Ecken eines zweiten Dreiecks 78 bilden. Dabei bilden die jeweils eine Ecke des ersten Dreiecks 77, die einem Kabelanschlusselement entspricht, und die jeweils eine Ecke des zweiten Dreiecks, die einem mit dem Kabelanschlusselement zu verbindenden Phasenanschlussteil entspricht, zwei einander zugehörige Ecken: [71, 72], [73, 74]. Das erste Dreieck 77 und das zweite Dreieck 78 sind innerhalb ihrer jeweiligen Ebene E1, E2 gegeneinander verdreht, wobei die Verdrehung ausgehend von der in Figur 2 dargestellten Lage erfolgt, bei der in einer Aufsicht senkrecht zur ersten und zweiten Ebene die Abstände (a) zwischen den jeweils zugehörigen Ecken des ersten und des zweiten Dreiecks einen kleinstmöglichen Wert annehmen.

Wie in Figur 5 am Beispiel des Kabelanschlusselementes 73 und des zugehörigen Phasenanschlussteils 74 zu sehen ist, verlaufen die Kabelanschlusselemente und Phasenanschlussteile in ihren Längsausdehnungen parallel zur Längsachse X des Gehäuses 60, so wie es auch bereits bei dem bekannten Kabelendverschluss der Figur 2 der Fall ist. Jedoch sind die einander zugehörigen Kabelanschlusselemente und Phasenanschlussteile, [71, 72], [73, 74] und [75, 76], aufgrund der relativen Verdrehung der durch sie gebildeten ersten (77) und zweiten (78) Dreiecke sowie aufgrund der sich voneinander unterscheidenden Größe dieser Dreiecke versetzt zueinander angeordnet. Um den daraus resultierenden Abstand a zwischen der Mittelachse M1 eines Kabelanschlusselements und der Mittelachse M2 des jeweils zugehörigen Phasenanschlussteils zu überbrücken und sie sowohl elektrisch als auch mechanisch miteinander zu verbinden, ist jeweils ein dazwischenliegendes Verbindungselement vorgesehen, welches zu den Mittelachsen M1, M2 einen Winkel zwischen 0 und 90 Grad einnimmt. Dieses Verbindungselement ist durch einen geeigneten Mechanismus in Teilen oder vollständig entfernbar gestaltet, so dass bei Bedarf zwischen Kabelanschlusselement und zugehörigem Phasenanschlussteil eine Isolierstrecke hergestellt werden kann.

Das erste Dreieck 77 und das zweite Dreieck 78 sind in der hier gezeigten Ausführung gleichseitige Dreiecke, deren Mittelpunkte übereinander liegen, weshalb der Abstand a für alle einander zugehörige Kabelanschlusselemente und Phasenanschlussteile derselbe ist. Die relative Drehung des ersten Dreiecks 77 zum zweiten Dreieck 78 ist hierbei um eine durch die Mittelpunkte Z der Dreiecke verlaufende Drehachse erfolgt. Bei nicht-gleichseitigen Dreiecken, beispielsweise gleichschenkligen oder auch unregelmäßigen Dreiecken, könnte die Drehung um eine Drehachse erfolgen, welche durch die Verbindungslinie zwischen einem so genannten ausgezeichneten Punkt des ersten Dreiecks und dem entsprechenden ausgezeichneten Punkt des zweiten Dreiecks gebildet wird, wobei zu den ausgezeichneten Punkten gehören der Höhenschnittpunkt, der Umkreismittelpunkt, der Inkreismittelpunkt und der Schwerpunkt des jeweiligen Dreiecks.

In den Figuren 4 bis 6 wird davon ausgegangen, dass sowohl die Kabelanschlusselemente als auch die Phasenanschlussteile in Dreieckform angeordnet sind. Alternativ können diese Bauteile jedoch auch in einer Linie angeordnet sein, wobei die linienförmige Anordnung nur auf der Seite der Kabelanschlusselemente oder nur auf der Seite der Phasenanschlussteile oder auch auf beiden Seiten erfolgen kann. In diesem Fall oder auch bei weiteren beliebigen Anordnungen ist es ebenfalls möglich, durch eine beliebige Drehung oder Aufspreizung der Leiter eine horizontale Isolierstrecke herzustellen.

Das Einfügen der separaten Verbindungselemente zwischen Kabelanschlusselement und Phasenanschlussteil bietet also den Vorteil, dass es möglich wird, den Kabelendverschluss durch eine manuelle Operation von der Schaltanlage elektrisch trennen zu können, ohne dass dafür die Bauhöhe der Hochspannungsschaltanlage signifikant vergrößert werden müsste.

Geht man nämlich vom Stand der Technik der Figur 1 aus, so könnte eine manuell zu bedienende Trennstelle zwischen Kabelendverschluss 2 und kombiniertem Leitungstrenn- und Erdungsschalter 9 eingebracht werden in Form einer in vertikaler Richtung, also in Verlängerung der Hochspannungskabel 11, 12, verlaufenden Isolationsstrecke, welche durch Handbetätigung zu überbrücken wäre. Dies würde jedoch dazu führen, dass die Bauhöhe der Schaltanlage 1 vergrößert würde. Durch die Einführung der nahezu in Querrichtung zur Längsausdehnung X des Kabelendverschlusses verlaufenden Verbindungselemente 61, 62, 63 wird es nun möglich, durch Vorsehen einer manuell lösbaren Verbindung, insbesondere einer Schraub- oder Steckverbindung, zwischen Verbindungselement und zugehörigem Kabelanschlusselement und/oder zugehörigem Phasenanschlussteil eine mechanisch zu betätigende Trennstelle einzubringen, die in horizontaler Richtung verläuft und die Bauhöhe somit unbeeinflusst lässt.

Der manuelle Zugriff auf die lösbaren Verbindungen zwischen Verbindungselementen 61, 62, 63 und den zugehörigen Kabelanschlusselementen 71, 73, 75 und/oder Phasenanschlussteilen 72, 74, 76 kann dabei über die ohnehin im Gehäuse 60 vorgesehenen, zur Anbringung von beispielsweise Hochspannungserkennungseinheiten dienen, Gehäuseöffnungen 64, 65 erfolgen oder über zusätzliche Montageöffnungen im Gehäuse. Besteht nur zu einem der beiden Elemente, Kabelanschlusselement bzw. Phasenanschlussteil eine lösbare Verbindung, sollte zu dem anderen Element zumindest eine drehbar gelagerte Verbindung bestehen, so dass das Verbindungselement nach Öffnen der lösbaren Verbindung in horizontaler Ebene, also um eine parallel zur Mittelachse des Kabelanschlusselements (M1) bzw. des Phasenanschlussteils (M2) verlaufende Drehachse, gedreht werden kann, um so eine ausreichende Isolierstrecke zu schaffen. Sind dagegen die Verbindungselemente an beiden Enden lösbar befestigt, können sie durch die Gehäuseöffnungen 64, 65 hindurch ganz aus dem Inneren des Gehäuses 60 entfernt werden. Unter Umständen sind die Verbindungselemente auch mehrteilig auszuführen, um sie in mehreren Einzelstücken aus dem Gehäuse 60 herausnehmen zu können.

## Patentansprüche

1. Kabelendverschluss zur Anbindung einer Schaltanlage an ein Hochspannungskabel umfassend
• mindestens ein Gehäuse (60),
• drei in das Gehäuse hineinragende, isolierte Kabelanschlusselemente (71, 73, 75) mit innenliegendem Leiter zur Herstellung einer elektrischen Verbindung der Schaltanlage mit jeweils einer am Ende einer Phase eines Hochspannungskabels angebrachten Kabelendverstärkung,
• drei von einer den Kabelanschlusselementen (71, 73, 75) gegenüberliegenden Seite ebenfalls in das Gehäuse (60) hineinragende, als Hohlkörper ausgeführte Phasenanschlussteile (72, 74, 76), in welche jeweils eine der Kabelendverstärkungen einzubringen ist, wobei
• die isolierten Kabelanschlusselemente (71, 73, 75) in einer ersten Ebene (E1), die senkrecht zur Eintrittsrichtung (M1) der Kabelanschlusselemente in das Gehäuse (60) verläuft, so angeordnet sind, dass sie die Ecken eines ersten Dreiecks (77) bilden,
• die Phasenanschlussteile (72, 74, 76) in einer zur ersten Ebene (E1) parallelen zweiten Ebene (E2) so angeordnet sind, dass sie die Ecken eines zweiten Dreiecks (78) bilden,
• wobei jede Ecke des ersten Dreiecks (77) jeweils mit einer ihr zugeordneten Ecke des zweiten Dreiecks (78) verbunden ist,
• **dadurch gekennzeichnet, dass** das erste Dreieck (77) und das zweite Dreieck (78) innerhalb ihrer jeweiligen Ebene (E1, E2) gegeneinander verdreht sind, wobei die Verdrehung ausgehend von einer Lage erfolgt, bei der in einer Aufsicht senkrecht zur ersten und zweiten Ebene die Abstände (a) zwischen den jeweils zugehörigen Ecken des ersten und des zweiten Dreiecks einen kleinstmöglichen Wert annehmen, und
• zwischen jeweils einem Kabelanschlusselement (71, 73, 75) und dem ihm elektrisch zugehörigen Phasenanschlussteil (72, 74, 76) ein Verbindungselement (61, 62, 63) angeordnet ist.

2. Kabelendverschluss nach Anspruch 1, **dadurch gekennzeichnet, dass** die innenliegenden Leiter der Kabelanschlusselemente und die Phasen des Hochspannungskabels innerhalb des Gehäuses (60) in einer ersten Richtung (X) parallel zueinander ausgerichtet sind und die Verbindungselemente jeweils einen aufgrund der Verdrehung entstandenen Versatz zwischen Kabelanschlusselement (71, 73, 75) und zugehörigem Phasenanschlussteil (72, 74, 76) überbrücken.

3. Kabelendverschluss nach Anspruch 1 oder 2, **dadurch gekennzeichnet, dass** die Verbindungselemente (61, 62, 63) jeweils mit ihrem zugehörigen Kabelanschlusselement und/oder dem zugehörigen Phasenanschlussteil lösbar verbunden sind.

4. Kabelendverschluss nach Anspruch 3, **dadurch gekennzeichnet, dass** die Verbindungselemente (61, 62, 63) jeweils mit ihrem zugehörigen Kabelanschlusselement und/oder dem zugehörigen Phasenanschlussteil schraubbar oder steckbar miteinander verbunden sind.

5. Kabelendverschluss nach einem der vorhergehenden Ansprüche, **dadurch gekennzeichnet, dass** die Verbindungselemente (61, 62, 63) an ihrer Kontaktstelle mit ihrem zugehörigen Kabelanschlusselement und/oder dem zugehörigen Phasenanschlussteil drehbar ausgeführt sind.

6. Kabelendverschluss nach einem der vorhergehenden Ansprüche, **dadurch gekennzeichnet, dass** die Verbindungselemente (61, 62, 63) mehrteilig ausgeführt sind.

7. Kabelendverschluss nach einem der vorhergehenden Ansprüche, **dadurch gekennzeichnet, dass** das erste Dreieck einer ersten Ausgestaltung des Gehäuses mit einer ersten Längsausdehnung (L1) genauso groß gewählt ist wie das erste Dreieck einer zweiten Ausgestaltung des Gehäuses mit einer zweiten, von der ersten abweichenden, Längsausdehnung (L2) und dass das erste Dreieck und das zugehörige zweite Dreieck bei beiden Ausgestaltungen so weit gegeneinander verdreht sind, bis die Abstände (a) zwischen den einander zugehörigen Ecken der Dreiecke der ersten Ausgestaltung ungefähr genauso groß sind wie die Abstände zwischen den einander zugehörigen Ecken der Dreiecke der zweiten Ausgestaltung.

8. Kabelendverschluss nach einem der vorhergehenden Ansprüche, **dadurch gekennzeichnet, dass** die Verbindungslinie zwischen einem ersten ausgezeichneten Punkt (Z) des ersten Dreiecks (77) und einem zweiten ausgezeichneten Punkt (Z) des zweiten Dreiecks (78) senkrecht zur ersten bzw. zweiten Ebene (E1, E2) verläuft und die Verdrehung um die durch die Verbindungslinie gebildete Achse erfolgt, wobei die ausgezeichneten Punkte insbesondere sind der Höhenschnittpunkt, der Umkreismittelpunkt, der Inkreismittelpunkt oder der Schwerpunkt des jeweiligen Dreiecks.

9. Kabelendverschluss nach einem der vorhergehenden Ansprüche, **dadurch gekennzeichnet, dass** wenigstens das erste Dreieck (77) oder das zweite (78) Dreieck ein gleichschenkliges Dreieck oder ein gleichseitiges Dreieck ist.

10. Kabelendverschluss nach Anspruch 9, **dadurch gekennzeichnet, dass** das erste Dreieck (77) und das zweite (78) Dreieck jeweils ein gleichseitiges Dreieck sind, deren Verdrehung um die Verbindungslinie der Mittelpunkte (Z) der beiden Dreiecke erfolgt ist.

11. Schaltanlage (1), welche elektrisch über einen Kabelendverschluss an ein Hochspannungskabel (11, 12) angebunden ist, wobei der Kabelendverschluss ein Kabelendverschluss (2) gemäß einem der vorhergehenden Ansprüche ist.

## Claims

1. Cable termination for connecting a switchgear assembly to a high-voltage cable, comprising
• at least one housing (60),
• three insulated cable connection elements (71, 73, 75) which protrude into the housing and have an internal conductor for establishing an electrical connection of the switchgear assembly to in each case one cable end reinforcement which is fitted to the end of a phase of a high-voltage cable,
• three phase connection parts (72, 74, 76) which likewise protrude into the housing (60) from a side which is situated opposite the cable connection elements (71, 73, 75), which connection parts are designed as hollow bodies into which in each case one of the cable end reinforcements is to be inserted, wherein
• the insulated cable connection elements (71, 73, 75) are arranged in a first plane (E1), which runs perpendicular to the entry direction (M1) of the cable connection elements into the housing (60), such that they form the corners of a first triangle (77),
• the phase connection parts (72, 74, 76) are arranged in a second plane (E2), which is parallel to the first plane (E1), such that they form the corners of a second triangle (78), wherein each corner of the first triangle (77) is connected in each case to a corner, associated therewith, of the second triangle (78), **characterized in that** the first triangle (77) and the second triangle (78) are rotated in relation to one another within their respective plane (E1, E2), wherein the rotation takes place starting from a position in which, in a plan view perpendicular to the first and second plane, the distances (a) between the respectively associated corners of the first and of the second triangle assume a value which is as small as possible, and a connecting element (61, 62, 63) is arranged between in each case one cable connection element (71, 73, 75) and the phase connection part (72, 74, 76) electrically associated therewith.

2. Cable termination according to Claim 1, **characterized in that** the internal conductors of the cable connection elements and the phases of the high-voltage cable within the housing (60) are oriented parallel to one another in a first direction (X), and the connecting elements each bridge an offset, which is produced on account of the rotation, between the cable connection element (71, 73, 75) and the associated phase connection part (72, 74, 76).

3. Cable termination according to Claim 1 or 2, **characterized in that** the connecting elements (61, 62, 63) are each connected to their associated cable connection element and/or to the associated phase connection part in a releasable manner.

4. Cable termination according to Claim 3, **characterized in that** the connecting elements (61, 62, 63) are each connected to their associated cable connection element and/or to the associated phase connection part in a screwable or pluggable manner to one another.

5. Cable termination according to one of the preceding claims, **characterized in that** the connecting elements (61, 62, 63) are of rotatable design at a contact point with their associated cable connection element and/or the associated phase connection part.

6. Cable termination according to one of the preceding claims, **characterized in that** the connecting elements (61, 62, 63) are of multipartite design.

7. Cable termination according to one of the preceding claims, **characterized in that** the first triangle of a first refinement of the housing with a first longitudinal extent (L1) is selected to be the same size as the first triangle of a second refinement of the housing with a second longitudinal extent (L2) which differs from the first longitudinal extent, and **in that** the first triangle and the associated second triangle are rotated in relation to one another in both refinements until the distances (a) between the associated corners of the triangles of the first refinement are approximately the same size as the distances between the associated corners of the triangles of the second refinement.

8. Cable termination according to one of the preceding claims, **characterized in that** the connecting line between a first marked point (Z) of the first triangle (77) and a second marked point (Z) of the second triangle (78) runs perpendicular to the first and, respectively, second plane (E1, E2) and the rotation takes place about the axis which is formed by the connecting line, wherein the marked points are, in particular, the orthocenter, the circumcenter, the incenter or the centroid of the respective triangle.

9. Cable termination according to one of the preceding claims, **characterized in that** at least the first triangle (77) or the second triangle (78) is an isosceles triangle or an equilateral triangle.

10. Cable termination according to Claim 9, **characterized in that** the first triangle (77) and the second triangle (78) are each an equilateral triangle, the rotation of said triangles takes place about the connecting line of the center point (Z) of the two triangles.

11. Switchgear assembly (1) which is electrically connected via a cable termination to a high-voltage cable (11, 12), wherein the cable termination is a cable termination (13) according to one of the preceding claims.

## Revendications

1. Terminaison de câble pour la connexion d'une installation de commutation à un câble haute tension, comprenant
• au moins un boîtier (60),
• trois éléments de raccordement de câbles isolés (71, 73, 75), qui font saillie dans le boîtier et qui comportent un conducteur interne destiné à établir une connexion électrique de l'installation de commutation à un renfort d'extrémité de câble fixé à chaque extrémité d'une phase d'un câble haute tension,
• trois parties de raccordement de phase (72, 74, 76), qui font également saillie dans le boîtier (60) sur un côté opposé aux éléments de raccordement de câble (71, 73, 75) et qui sont réalisées sous forme de corps creux, dans lesquels l'un des renforts d'extrémité de câble doit être respectivement introduit, dans laquelle
• les éléments de raccordement de câbles (71, 73, 75) isolés sont disposés dans un premier plan (E1) perpendiculaire à la direction d'introduction (M1) des éléments de raccordement de câbles dans le boîtier (60) de manière à former les angles d'un premier triangle (77),
• les parties de raccordement de phase (72, 74, 76) sont disposées dans un deuxième plan (E2) parallèle au premier plan (E1) de manière à former les angles d'un deuxième triangle (78),
• dans laquelle chaque angle du premier triangle (77) est relié à un angle qui lui est associé du deuxième triangle (78),
• **caractérisé en ce que** le premier triangle (77) et le deuxième triangle (78) sont tournés l'un vers l'autre dans leurs plans respectifs (E1, E2), dans laquelle la rotation s'effectue à partir d'une position à laquelle, dans une vue perpendiculaire aux premier et deuxième plans, les distances (a) entre les angles respectifs associés des premier et deuxième triangles prennent la valeur la plus petite possible, et
• un élément de liaison (61, 62, 63) est respectivement disposé entre un élément de raccordement de câble (71, 73, 75) et la partie de raccordement de phase (72, 74, 76) qui lui est électriquement associée.

2. Terminaison de câble selon la revendication 1, **caractérisée en ce que** les conducteurs internes des éléments de raccordement de câble et les phases du câble haute tension à l'intérieur du boîtier (60) sont alignés parallèlement les uns par rapport aux autres dans une première direction (X) et **en ce que** les éléments de raccordement pontent respectivement un décalage résultant de la torsion entre l'élément de raccordement de câble (71, 73, 75) et la partie de raccordement de phase (72, 74, 76) associée.

3. Terminaison de câble selon la revendication 1 ou 2, **caractérisée en ce que** les éléments de liaison (61, 62, 63) sont respectivement reliés de manière amovible à l'élément de raccordement de câble qui leur est associé et/ou à la partie de raccordement de phase associée.

4. Terminaison de câble selon la revendication 3, **caractérisée en ce que** les éléments de liaison (61, 62, 63) peuvent être vissés ou enfichés les uns dans les autres avec l'élément de raccordement de câble associé et/ou la partie de raccordement de phase associée.

5. Terminaison de câble selon l'une des revendications précédentes, **caractérisée en ce que** les éléments de liaison (61, 62, 63) sont réalisés de manière à pouvoir tourner à leur point de contact avec l'élément de raccordement de câble qui leur est associé et/ou la partie de raccordement de phase associée.

6. Terminaison de câble selon l'une des revendications précédentes, **caractérisée en ce que** les éléments de liaison (61, 62, 63) sont réalisés en plusieurs parties.

7. Terminaison de câble selon l'une des revendications précédentes, **caractérisée en ce que** le premier triangle d'une première configuration du boîtier présentant une première extension longitudinale (L1) est sélectionné de manière à ce qu'il soit aussi grand que le premier triangle d'une deuxième configuration du boîtier présentant une deuxième extension longitudinale (L2) différente de la première, et **en ce que** le premier triangle et le deuxième triangle associé sont mis en rotation dans les deux configurations jusqu'à ce que les distances (a) entre les angles associés des triangles de la première configuration soient approximativement aussi grandes que les distances entre les angles associés des triangles de la deuxième configuration.

8. Terminaison de câble selon l'une des revendications précédentes, **caractérisée en ce que** la ligne de jonction entre un premier point de référence (Z) du premier triangle (77) et un deuxième point de référence (Z) du deuxième triangle (78) est perpendiculaire aux premier et deuxième plans (E1, E2), respectivement, et **en ce que** la rotation s'effectue autour de l'axe formé par la ligne de jonction, dans laquelle les points de référence sont notamment la hauteur, le centre du cercle circonscrit, le centre du cercle inscrit ou le centre de gravité du triangle respectif.

9. Terminaison de câble selon l'une des revendications précédentes, **caractérisée en ce qu'**au moins le premier triangle (77) ou le deuxième triangle (78) est un triangle isocèle ou un triangle équilatéral.

10. Terminaison de câble selon la revendication 9, **caractérisée en ce que** le premier triangle (77) et le deuxième triangle (78) sont chacun un triangle équilatéral dont une rotation autour de la ligne de jonction des centres (Z) des deux triangles s'est produite.

11. Installation de commutation (1) reliée électriquement par une terminaison de câble à un câble haute tension (11, 12), dans laquelle la terminaison de câble est une terminaison de câble (2) selon l'une des revendications précédentes.
